# FASCICULE DE BREVET EUROPEEN

(11) **EP 2 823 374 B1**
(45) Date de publication et mention de la délivrance du brevet: **03.05.2017**
(21) Numéro de dépôt: 13712701.5
(22) Date de dépôt: 07.03.2013
(51) Int. Cl.: G06F 1/32, H04W 52/02

(54) **SYSTEME ELECTRONIQUE COMPORTANT UN MODE DE VEILLE SANS CONSOMMATION ELECTRIQUE**
ELEKTRONISCHES SYSTEM MIT EINEM STANDBY-MODUS OHNE STROMVERBRAUCH
ELECTRONIC SYSTEM COMPRISING A STANDBY MODE WITHOUT ELECTRICAL CONSUMPTION

(30) Priorité: 07.03.2012 FR 1252084
(43) Date de publication de la demande: 14.01.2015
(73) Titulaire: Ecole Centrale de Lyon, 69134 Ecully (FR); Université Lyon 1 Claude Bernard, 69100 Villeurbanne (FR); Institut National des Sciences Appliquées de Lyon, 69621 Villeurbanne Cedex (FR); Université de Limoges, 87000 Limoges (FR); Centre National de la Recherche Scientifique, 75016 Paris (FR)
(72) Inventeur: VOLLAIRE, Christian, 69160 Tassin (FR); THEVENOT, Marc, 87060 Limoges Cedex (FR); MARIAN, Vlad, 69131 Ecully Cedex (FR); MENUDIER, Cyrille, 87060 Limoges Cedex (FR)
(74) Mandataire: GIE Innovation Competence Group
(86) Numéro de dépôt international: PCT/EP2013/054627
(87) Numéro de publication internationale: WO 2013/132016

(56) Documents cités:
- EP-A1- 1 857 911
- US-A- 5 790 946
- US-A1- 2006 101 298

## Description

L'invention concerne les appareils alimentés électriquement et comportant un mode de veille activé ou désactivé par une commande à distance.

Un grand nombre d'appareils électroniques ou électriques sont alimentés par le réseau électrique public et associés à une télécommande. La télécommande permet d'interférer avec l'appareil électronique à distance pendant son fonctionnement, par exemple pour modifier certains de ses paramètres de fonctionnement. Ces appareils sont le plus couramment des produits audiovisuels (télévision, décodeur, modulateur/démodulateur, chaîne haute fidélité, lecteur de disque optique..), ou des produits domotiques (éclairage, volet roulant, portail, porte de garage, diffuseur de climatisation/chauffage...).

Dans un grand nombre de cas, la télécommande permet également de placer l'appareil dans un mode de veille ou de sortir l'appareil de ce mode de veille. Durant le mode de veille, l'appareil est toujours alimenté par le réseau électrique et il consomme peu d'énergie. Un tel mode de veille permet d'éviter à l'utilisateur de devoir venir jusqu'à l'appareil pour actionner un interrupteur mécanique pour procéder à son extinction ou son allumage.

Cependant, un circuit de réception des commandes émises par la télécommande reste alimenté par le réseau électrique, afin de permettre le traitement des commandes de sortie du mode de veille émises par la télécommande. Du point de vue technique, le circuit de réception consomme car il scrute en permanence le bruit (spectre radiofréquence ou infrarouge) jusqu'à détecter une trame intelligible. Une consommation est ainsi induite d'une part par une interface de réception, par un circuit de traitement et par des pertes dans l'alimentation maintenue connectée au réseau électrique. Ainsi, la consommation des appareils à activation à distance dans leur mode de veille n'est pas nulle.

Cette consommation en mode de veille fait l'objet de règlementations de plus en plus contraignantes visant à limiter son amplitude pour chaque appareil électronique.

Cependant, des études montrent que la consommation des appareils en veille représente une part prépondérante et croissante de la consommation d'énergie mondiale. Cette consommation augmente notamment du fait de l'augmentation extrêmement importante d'appareils électroniques et domotiques en service. Cette consommation était estimée à 50TWh en 2008 juste dans le territoire de l'Union Européenne. Dans le contexte d'une sensibilisation croissante aux problématiques environnementales, il est souhaitable de faire diminuer sensiblement cette consommation d'énergie. Les fabricants d'appareils électroniques font notamment d'importants efforts sur la conception et la sélection des composants pour réduire la consommation des circuits de réception en mode de veille.

Le document EP1857911 décrit un procédé d'activation d'un appareil électronique placé dans un mode de veille. Une télécommande émet un signal d'activation alors que l'appareil électronique est isolé de l'alimentation d'un réseau par un interrupteur pour présenter une consommation électrique nulle. La télécommande émet un signal d'activation avec une puissance suffisante pour alimenter un circuit radiofréquence en réception. Le signal d'activation sinusoïdal est redressé pour alimenter le circuit radiofréquence. Le signal d'activation comprend un code d'identification de l'appareil à réveiller. Le code d'identification reçu est comparé à un code d'identification mémorisé au préalable. Si les codes d'identification correspondent, un interrupteur est fermé afin de connecter l'appareil à l'alimentation du réseau. L'énergie de fermeture de l'interrupteur est stockée dans un stockage de charge lorsque l'appareil est en cours d'alimentation. Le code d'identification est superposé au signal d'activation transportant l'énergie appropriée pour alimenter le circuit radiofréquence.

Cependant, un tel système d'activation n'est décrit que très succinctement et son dimensionnement pour une application domestique n'est pas suffisamment détaillé. Par ailleurs, ce système d'activation ne permet de récupérer qu'une énergie assez réduite du signal d'activation ou nécessite une durée de signal d'activation trop longue pour l'utilisateur.

L'invention vise à résoudre un ou plusieurs de ces inconvénients. L'invention porte ainsi sur un système électronique, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma de principe d'un système électronique selon un exemple de mise en oeuvre de l'invention ;
- la figure 2 illustre de façon schématique un émetteur de commande de mode de veille et un signal électromagnétique généré par cet émetteur dans un exemple de mise en oeuvre de l'invention ;
- la figure 3 est un schéma de fonctionnement d'un circuit récepteur;
- la figure 4 est un schéma d'une première variante d'interface de réception ;
- la figure 5 est un schéma d'une deuxième variante d'interface de réception ;
- la figure 6 est une représentation schématique d'une variante de convertisseur d'un circuit récepteur ;
- la figure 7 est une représentation schématique d'une variante de circuit de commutation 4 ;
- la figure 8 est une représentation schématique d'un exemple de système alimenté par un réseau électrique public ;
- la figure 9 est une représentation schématique d'un exemple de système alimenté par une batterie ;
- la figure 10 est une représentation schématique d'une variante de circuit de commutation ;
- la figure 11 est une représentation schématique d'une variante de circuit récepteur ;
- la figure 12 est une représentation schématique d'une variante de système prévue pour une alimentation par batterie ;
- la figure 13 est une représentation schématique d'une variante de système présentant un circuit récepteur à tolérance accrue ;
- la figure 14 est une vue de face d'un exemple d'antenne combinant plusieurs circuits d'antenne ayant des directivités distinctes.

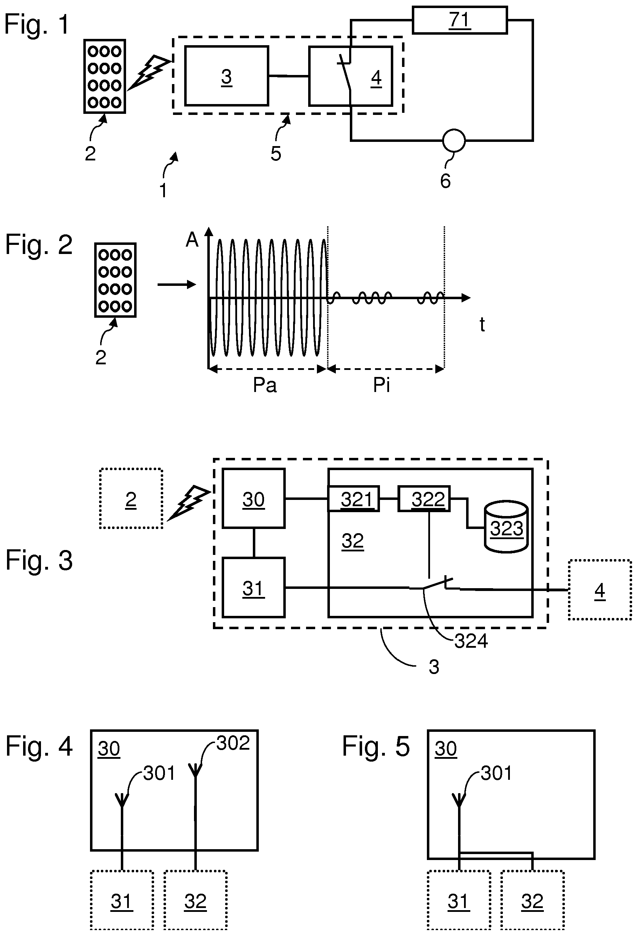

La figure 1 est une représentation schématique d'un exemple de système électronique pour la mise en oeuvre de l'invention. Le système électronique 1 comprend un émetteur de commande de mode de veille 2 et une charge électrique 71 (typiquement un appareil électronique) que l'on souhaite sélectivement mettre en veille ou activer depuis un mode de veille, à distance. À cet effet, le système 1 inclut un circuit de gestion de la mise en veille 5. Le circuit 5 comporte un interrupteur configuré pour sélectivement connecter/déconnecter la charge 71 d'une alimentation électrique 6. Le circuit 5 comporte un circuit récepteur 3 et un circuit de commutation 4. Le circuit récepteur 3 est destiné à recevoir notamment des commandes de mise en veille ou d'activation de la charge 71. Le circuit de commutation 4 est destiné à connecter/déconnecter sélectivement la charge 71 de l'alimentation électrique 6. Une interface de connexion non illustrée est interposée entre le circuit de commutation 4 et l'alimentation électrique 6, afin de permettre un raccordement sélectif du système 1 à l'alimentation électrique 6.

Le circuit 5 selon l'invention présente une consommation électrique nulle lorsque la charge électrique 71 est en veille. Selon l'invention, le circuit 5 et en particulier son circuit récepteur 3, ne sont pas alimentés par l'alimentation électrique 6. L'énergie nécessaire pour alimenter le circuit récepteur 3 et obtenir une commutation dans le circuit 4 est extraite du signal d'activation émis par l'émetteur de commande 2.

La figure 2 illustre de façon schématique l'émetteur de commande de mode de veille 2 et un signal électromagnétique généré par cet émetteur 2 lors d'une commande d'activation de la charge 71 initialement placée en mode de veille. Lors de l'activation de la charge 71 par sollicitation de l'émetteur 2, un signal électromagnétique d'activation est émis. Ce signal d'activation inclut séquentiellement un signal d'alimentation durant la phase Pa, suivi d'un signal d'identification durant la phase Pi.

L'émetteur 2 est radiatif et émet le signal d'activation dans la bande de fréquences UHF, ce qui permet d'obtenir une portée suffisante pour une application domestique (allant par exemple de un à plusieurs mètres), un rendement élevé à la conversion en réception, et la disponibilité d'une grande gamme de composants électroniques largement diffusés et optimisés. Avantageusement, le signal d'activation émis est un signal micro-ondes émis dans la bande de fréquences allant de 2,4GHz à 2,49GHz, par exemple dans la bande ISM. Outre l'utilisation de composants largement diffusés, une telle bande de fréquences permet d'utiliser des antennes d'émission et de réception dont l'encombrement est compatible avec une intégration dans des appareils domestiques.

La puissance du signal d'alimentation est au moins dix fois supérieure à la puissance du signal d'identification, et de préférence au moins cent fois supérieure. Ainsi, pour une énergie consommée pendant l'émission du signal d'activation, une plus grande énergie peut être affectée au signal d'alimentation, ce qui permet d'accroître la portée de l'émetteur 2 et l'énergie récupérée au niveau du récepteur 3.

Pour conserver un confort d'utilisation optimal pour l'utilisateur, la durée cumulée des phases Pa et Pi est avantageusement inférieure ou égale à 200 ms, et de préférence inférieure ou égale à 100 ms, pour rendre la durée d'activation peu perceptible en temps de réponse. La proportion de la phase Pa dans la durée du signal d'activation est avantageusement très supérieure à celle de la phase Pi, pour optimiser la récupération d'énergie dans un temps assez bref. Pour un signal d'activation d'une durée de 100ms, la durée de la phase Pa pourra être comprise entre 95 et 99ms, pour une durée de la phase Pi comprise entre 1 et 5ms. Le rapport cyclique de la phase Pa sera ainsi avantageusement au moins égal à 95% du signal d'activation, voire de préférence au moins égal à 99%.

On peut envisager que les phases Pa et Pi soient réalisées avec les mêmes fréquences de porteuse. On peut également envisager que les fréquences de porteuse des phases Pa et Pi soient différentes et que seule la phase Pa soit réalisée avec les fréquences de porteuse détaillées auparavant.

Tout codage approprié peut être utilisé pour le signal d'identification.

Le signal d'identification peut par exemple être codé en utilisant une modulation par saut de fréquence. Le signal d'identification reçu pourra être comparé à une succession de fréquences mémorisée pour la charge à activer.

Le signal d'identification peut également être codé en tout ou rien. Le décodage peut être réalisé en utilisant un mélangeur à fréquence centrale variable, combiné à un amplificateur en bande intermédiaire et combiné à un détecteur à diodes passif. Le décodage peut également être réalisé en utilisant simplement un détecteur à diodes accolé à un amplificateur basse fréquence. Un détecteur à diodes permet d'extraire directement un signal d'identification à quelques kilohertz à partir du signal d'identification émis en micro-ondes par l'émetteur 2. Une amplification basse fréquence permet de réduire la consommation du circuit d'identification 32. L'amplificateur transforme ce signal d'identification basse fréquence à un niveau logique d'un microcontrôleur.

La puissance maximale d'émission de l'émetteur 2 pourra être limitée à 1W en vue de limiter l'exposition des utilisateurs. La puissance maximale d'émission de l'émetteur 2 pourra également être au moins égale à 500mW afin de disposer d'une portée de commande importante.

Pour une portée minimale de 5 m de l'émetteur 2, en partant sur un gain de 6dBi entre l'émetteur et le récepteur, on obtient une puissance reçue d'environ 30 µW (-15 dBm) à 5 m pour un émetteur émettant à 500 mW à une fréquence de 2.45 GHz, en tenant compte des rendements de conversion envisagés.

L'émetteur 2 peut comporter une antenne du type Yagi-Uda. Une telle antenne permet d'obtenir un rayonnement à l'horizon, tout en pouvant être logeable dans un boîtier plat.

Pour générer le signal d'activation, l'émetteur 2 inclut un amplificateur radiofréquence consommant un courant relativement important. Pour fournir un fort courant de pointe, l'émetteur 2 inclut un organe de stockage d'une charge tampon, par exemple un condensateur.

L'émetteur 2 devra généralement pouvoir générer une tension d'alimentation de son amplificateur radiofréquence de l'ordre de 3,3V ou 5V. Une telle tension d'alimentation pourra être réalisée avec un rendement relativement élevé au moyen d'un convertisseur continu/continu de type boost.

La figure 3 est une représentation schématique d'un circuit récepteur 3 destiné à mettre en oeuvre l'invention. Le circuit récepteur 3 inclut une interface de réception 30 d'un signal électromagnétique, un convertisseur alternatif/continu 31, et un circuit d'identification 32. L'interface de réception 30 présente une bande passante correspondant à la fréquence d'émission du signal d'activation par l'émetteur de commande 2. L'interface de réception 30 réalise la transduction du signal d'activation électromagnétique en un signal électrique alternatif. L'interface de réception 30 applique un signal électrique alternatif généré sur le convertisseur 31 et un signal électrique alternatif sur le circuit d'identification 32. On peut envisager que l'interface de réception soit réalisée sur une face d'un substrat et que les composants montés en surface du convertisseur 31 et du circuit d'identification 32 soient montés sur la face opposée de ce substrat.

Lors de la réception d'un signal d'activation approprié sur l'interface de réception 30, le convertisseur 31 transforme le signal électrique alternatif fourni par l'interface de réception 30 en tension de commande continue, de façon connue en soi. Le convertisseur 31 peut être basé sur un redresseur à diodes de type mono alternance, présentant un rendement de conversion relativement élevé. Un redresseur double alternance peut également être utilisé pour obtenir une tension de sortie plus élevée, au détriment d'un rendement de conversion rabaissé.

Le convertisseur 31 peut comporter un accumulateur à sa sortie afin de cumuler la charge électrique générée. Un interrupteur 324 est interposé entre la sortie du convertisseur 31 et le circuit de commutation 4. La tension continue générée en sortie par le convertisseur 31 est destinée à alimenter un interrupteur pour assurer sa commutation de façon à établir l'alimentation de la charge 71 par l'alimentation 6, et ainsi à activer la charge 71.

Le circuit d'identification 32 inclut un démodulateur 321. Le démodulateur 321 assure la démodulation du signal d'identification inclus dans le signal électrique alternatif fourni par l'interface de réception 30. Le démodulateur 321 peut inclure un filtre approprié pour écrêter le signal reçu ou réaliser un filtrage passe bande. Un circuit de traitement 322 traite le signal fourni par le démodulateur 321 et le compare à l'identifiant d'une charge électrique, mémorisé dans une mémoire 323. L'identifiant mémorisé dans la mémoire 323 peut être unique et correspondre à un numéro de série de la charge 71. Le circuit de traitement 322 génère un signal d'activation seulement lorsqu'il y a correspondance entre un signal d'identification reçu et l'identifiant mémorisé. Le circuit d'identification 32 permet ainsi de discriminer un signal d'activation destiné à la charge 71 d'autres signaux d'activation destinés à d'autres charges (en particulier dans la bande ISM), ou de bruits électromagnétiques. Le circuit d'identification 32 est avantageusement inclus dans un circuit intégré à faible consommation.

La combinaison de l'interface de réception 30 et du convertisseur 31 peut être mise en oeuvre sous la forme d'une antenne redresseuse (désignée par le terme rectenna en langue anglaise). Pour optimiser le rendement global d'une telle antenne redresseuse, l'antenne présente une impédance de rayonnement équivalente à l'impédance du convertisseur 31. Le convertisseur 31 peut inclure un filtre passe-haut en entrée, connecté à un redresseur à diodes de type mono alternance. Le convertisseur 31 peut inclure un filtre passe-bas en sortie du redresseur à diodes, afin de lisser la tension du signal d'activation.

La figure 4 est un schéma d'une première variante d'interface de réception 30. Dans cette première variante, l'interface de réception 30 inclut une première antenne 301 destinée à la réception du signal d'alimentation, et une deuxième antenne 302 destinée à la réception du signal d'identification. Cette variante permet notamment d'utiliser des fréquences différentes pour le signal d'alimentation et le signal d'identification, ou de réaliser un codage d'identification par saut de fréquences.

La figure 5 est un schéma d'une deuxième variante d'interface de réception 30. Dans cette deuxième variante, l'interface de réception 30 inclut une antenne 301 destinée à la fois à la réception du signal d'alimentation et à la réception du signal d'identification.

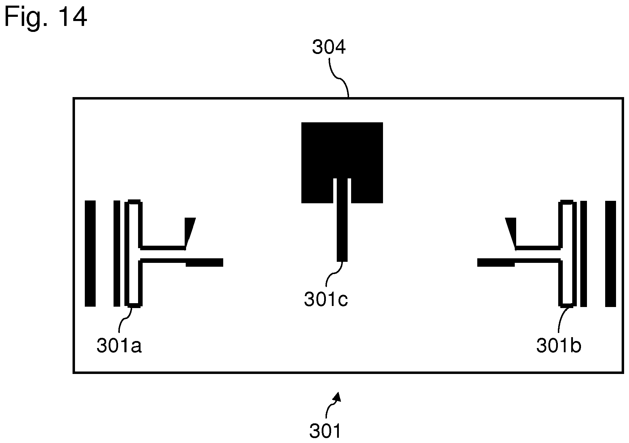

L'antenne 301 et/ou l'antenne 302 sont avantageusement configurées pour présenter un lobe de réception présentant un angle relativement important. Avantageusement, un tel lobe de réception comportera un angle supérieur à 120°, et avantageusement proche de 180°. Un tel lobe de réception peut notamment être obtenu en accolant plusieurs éléments d'antenne présentant des directivités distinctes. La figure 14 illustre un exemple d'antenne 301 comprenant plusieurs éléments d'antenne 301 a, 301 b, 301c. Pour des raisons de simplification, seule une face d'un substrat 304 sur lequel les éléments d'antenne 301 a, 301 b, 301c sont ménagés est illustrée. Chaque élément 301 a, 301 b et 301c a une directivité propre, ces directivités étant complémentaires pour permettre une réception avec un angle de 180° dans un plan normal au substrat 304. Les éléments 301 a, 301 b, 301c sont munis de plans de masse disposés sur la face opposée du substrat 304.

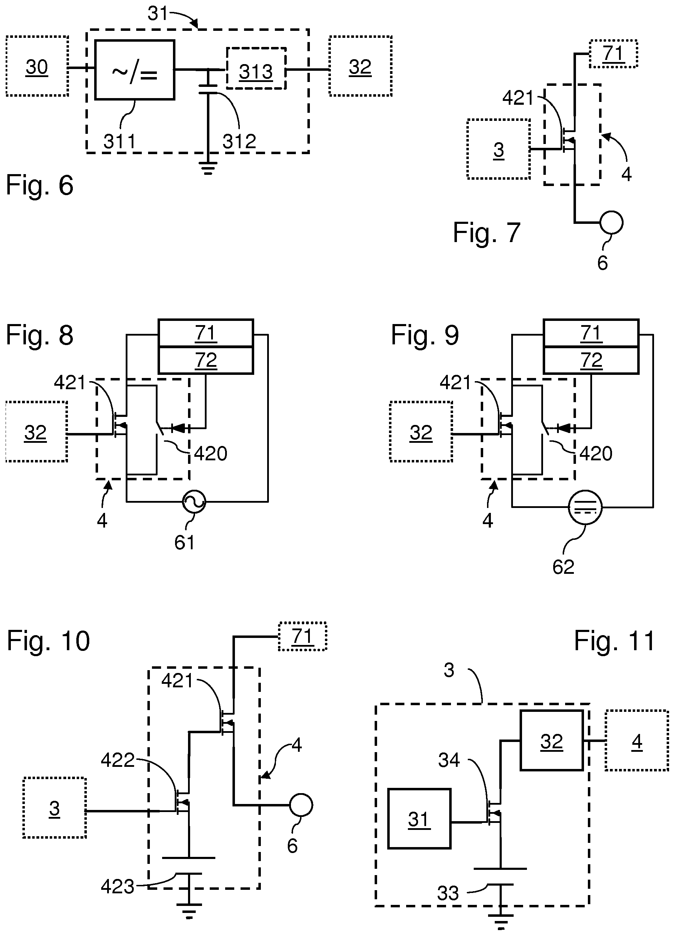

La figure 6 est une représentation schématique d'une variante d'un convertisseur 31 pouvant être intégré dans le circuit de réception 3. Le convertisseur 31 comprend un circuit convertisseur alternatif/continu 311 à son entrée. Un condensateur 312 est connecté entre la sortie du circuit 311 et la masse. Le convertisseur 31 comprend un circuit convertisseur élévateur de tension 313 dont l'entrée est connectée à la sortie du circuit 311. Du fait de contraintes relatives au rayonnement de l'émetteur 2 ou à la conception du circuit 311, la tension fournie par ce circuit 311 lors de la réception d'un signal d'alimentation peut s'avérer insuffisante (par exemple de l'ordre de 100 à 200mV) pour assurer la commutation d'un interrupteur. Le circuit élévateur 312 permet de convertir la tension continue fournie par le circuit 311 en une tension continue présentant une amplitude suffisante pour assurer la fermeture d'un interrupteur et ainsi conduire à la connexion de la charge 71 à l'alimentation 6. Selon le type d'interrupteur commandé par la tension fournie par le convertisseur 31, un élévateur de tension fournissant une tension de sortie de l'ordre de 500mV pourra s'avérer adéquat.

La figure 7 est une représentation schématique d'un circuit de commutation 4 selon un mode de réalisation possible. Dans cet exemple, le circuit de commutation 4 comprend un interrupteur de connexion/déconnexion entre l'alimentation 6 et la charge 71. Cet interrupteur est destiné à connecter la charge 71 à l'alimentation 6, au moins pendant une phase initiale d'activation de cette charge 71, c'est-à-dire durant sa sortie du mode de veille. En l'occurrence, cet interrupteur est mis en oeuvre sous la forme d'un transistor MOS 421 (en l'occurrence un nMOS) dont la grille est commandée par un signal d'activation provenant du circuit récepteur 3. Un signal d'activation d'amplitude suffisante provenant du circuit de réception 3 permet ainsi d'assurer la fermeture du transistor 421.

Les différents interrupteurs décrits dans le cadre de l'invention sont avantageusement mis en oeuvre sous forme de transistors MOS pour la faible énergie de commande consommée lors de leur commutation. Le transistor MOS 421 pourra présenter une énergie de fermeture de l'interrupteur de puissance inférieure ou égale à 0,2 µJ (60 nC sous 3 volts sur sa grille).

Le transistor MOS 421 doit présenter un courant de fuite suffisamment faible pour que l'on puisse considérer que la consommation en veille est nulle. Une consommation inférieure ou égale à 1 mW sera considérée comme une consommation en veille nulle.

La figure 8 représente une première variante d'un système 1 dans lequel la charge 71 est alimentée par un réseau public alternatif 61. Dans cette variante, le circuit de commutation 4 inclut un interrupteur 420 connecté en parallèle de l'interrupteur 421 entre la charge 71 et la source 61. Lorsque le système 1 est en veille, les interrupteurs 420 et 421 sont ouverts. Lors de la réception d'un signal d'activation, l'interrupteur 421 est transitoirement fermé, de sorte que la charge 71 est alimentée par la source 61. Un circuit de maintien automatique d'alimentation 72 est alors également alimentée par la source 61. Ce circuit de maintien 72 applique alors une commande de fermeture sur l'interrupteur 420. Tant qu'une commande de mise en veille n'est pas reçue par le système 1, le circuit de maintien 72 maintient l'interrupteur 420 fermé. Ainsi, lorsque l'énergie reçue de l'émetteur de commande 2 s'avère ensuite insuffisante pour maintenir l'interrupteur 421 fermé, l'alimentation de la charge 71 par la source 61 est assurée par l'intermédiaire de l'interrupteur 420. Lors d'une commande de mise en veille, le circuit de maintien 72 peut ouvrir l'interrupteur 420, l'interrupteur 421 étant déjà ouvert.

La figure 9 représente une deuxième variante d'un système 1 dans lequel la charge 71 est alimentée par une batterie d'accumulateur 62. Dans cette variante, le circuit de commutation 4 inclut un interrupteur 420 connecté en parallèle de l'interrupteur 421 entre la charge 71 et la source 62. Lorsque le système 1 est en veille, les interrupteurs 420 et 421 sont ouverts. Lors de la réception d'un signal d'activation, l'interrupteur 421 est transitoirement fermé, de sorte que la charge 71 est alimentée par la source 62. Un circuit de maintien automatique d'alimentation 72 est alors également alimenté par la source 62. Ce circuit de maintien 72 applique alors une commande de fermeture sur l'interrupteur 420. Tant qu'une commande de mise en veille n'est pas reçue par le système 1, le circuit de maintien 72 maintient l'interrupteur 420 fermé. Ainsi, lorsque l'énergie reçue de l'émetteur de commande 2 s'avère insuffisante pour maintenir l'interrupteur 421 fermé, l'alimentation de la charge 71 par la source 62 est assurée par l'intermédiaire de l'interrupteur 420.

Lorsque la charge 71 est destinée à être alimentée par un réseau électrique public, l'interrupteur 421 doit être configuré pour être traversé par du courant alternatif. De plus, cet interrupteur 421 doit être dimensionné pour résister à l'application d'une tension de l'ordre de 500V entre ses bornes, voire 600V, et pouvoir assurer un sectionnement pour une telle valeur de tension. Un transistor MOS utilisé comme interrupteur 421 et présentant un tel dimensionnement nécessite une tension de l'ordre de 3 V entre grille et source pour commuter vers l'étape passant.

La figure 10 illustre une variante du circuit de commutation 4 permettant d'assurer la fermeture d'un tel interrupteur 421 même lorsque l'amplitude du signal d'activation fournie par le circuit récepteur 3 est relativement réduite. À cet effet, le circuit de commutation 4 comporte en outre un transistor MOS 422 et une batterie 423. La source du transistor 422 est connectée à la borne positive de la batterie 423. Le drain du transistor 422 est connecté à la grille du transistor 421. La grille du transistor 422 reçoit le signal d'activation provenant du circuit récepteur 3. La batterie 423 permet d'appliquer un niveau de tension adéquat sur la grille du transistor 421 lors de la fermeture du transistor 422, afin d'obtenir la fermeture de ce transistor 421. L'énergie de commande pour la fermeture du transistor 422 peut ainsi être limitée à une valeur relativement limitée, aisément compatible avec la quantité d'énergie pouvant être extraite du signal d'alimentation reçu sur l'interface 30.

La batterie 423 peut être montée à demeure dans le système 1 et présenter une durée de vie équivalente ou supérieure à celle de ce système 1. Une alimentation par batterie est possible, puisque les interrupteurs du circuit de commutation 4 ne sont en pratique fermés que pendant une durée cumulée extrêmement réduite durant le cycle de vie du système 1. La batterie 423 peut également être rechargée durant l'alimentation de la charge 71 par l'alimentation.

Le circuit d'identification 32 peut être alimenté soit par l'intermédiaire de la tension de sortie du convertisseur 31, soit par l'intermédiaire d'une batterie (par exemple une batterie telle qu'une pile bouton montée à demeure dans le circuit récepteur 3 et présentant une durée de vie supérieure à ce système 1).

La figure 11 illustre une variante dans laquelle le circuit d'identification 32 est alimenté par une batterie 33. Un interrupteur 34 est connecté entre la borne positive de la batterie 33 et l'entrée du circuit d'identification 32. La fermeture de l'interrupteur 34 est commandée par le signal d'activation généré à la sortie du convertisseur 31. En l'occurrence, l'interrupteur 34 est un transistor MOS dont la grille est connectée à la sortie du convertisseur 31, dont la source est connectée à la borne positive de la batterie 33, et dont le drain est connecté à l'entrée du circuit d'identification 32. Lors de la réception d'un signal d'activation, le transistor 34 se ferme. La tension de la batterie 33 peut alors alimenter le circuit d'identification 32 et commander la fermeture du transistor 421 lorsque le circuit d'identification 32 valide l'identification de la charge 71. Une alimentation par batterie à demeure est possible, puisque le circuit d'identification 32 ne fonctionne en pratique que pendant une durée cumulée extrêmement réduite durant le cycle de vie du système 1.

Dans cette variante, on peut envisager un circuit d'identification dédoublé en deux étages. Un premier étage permet de réaliser une démodulation très simple, et présente ainsi avantageusement une consommation très réduite pour pouvoir être alimenté par la batterie 33 lors de la réception d'un signal d'activation. Le premier étage bloque l'alimentation d'un deuxième étage de démodulation si le signal reçu sur l'interface 30 ne satisfait pas des conditions basiques de correspondance avec le signal d'identification attendu. Le deuxième étage effectue une démodulation plus précise du signal d'identification lorsque le premier étage a validé le signal reçu. Pour éviter une alimentation intempestive du deuxième étage, potentiellement plus consommateur d'énergie, le premier étage filtre les signaux reçus ne correspondant manifestement pas au signal d'identification attendu.

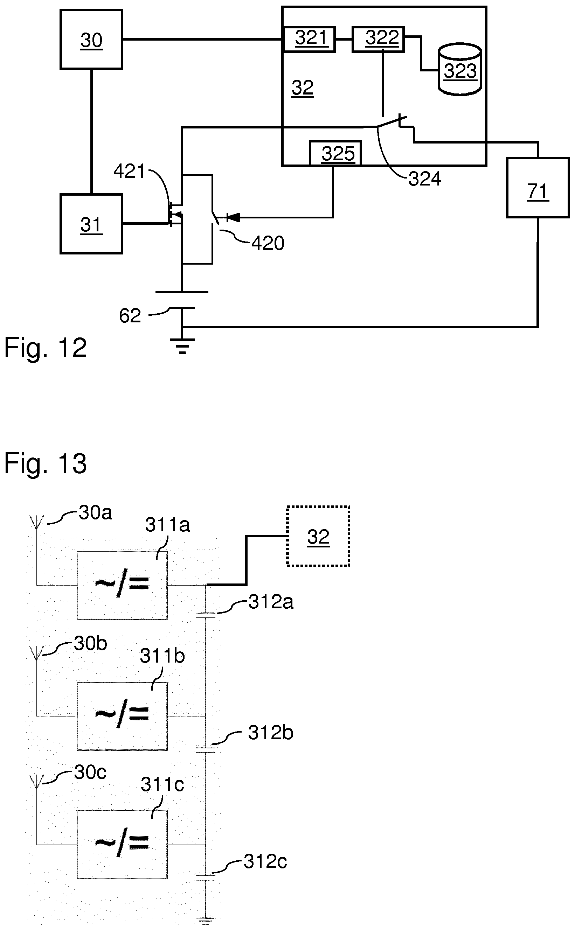

La figure 12 est une variante du système 1 optimisée pour une alimentation de la charge 71 par une batterie 62. Comme dans les exemples précédents, l'interface de réception 30 fournit le signal d'identification au circuit d'identification 32 et le signal d'alimentation au convertisseur 31. Comme dans l'exemple de la figure 9, le circuit de commutation 4 comporte un interrupteur 420 et un interrupteur 421 connectés en parallèle. L'interrupteur 421 est un transistor MOS dont la grille est connectée à la sortie du convertisseur 31, dont la source est connectée à la borne positive de la batterie 62 et dont le drain est connecté à l'entrée du circuit d'identification 32. Le démodulateur 321 reçoit le signal d'identification fourni par l'interface de réception 30. Le circuit d'identification 32 comporte un circuit de maintien automatique d'alimentation 325.

Lorsque le convertisseur 31 génère la tension d'activation, le transistor 421 est fermé transitoirement. Le circuit d'identification 32 est alors alimenté par la batterie 62. Le circuit d'identification 32 détermine ensuite que le signal d'identification reçu correspond bien à la charge 71 et réalise la fermeture de l'interrupteur 324. Le circuit de maintien 325 maintient l'interrupteur 420 fermé, de sorte que la charge 71 reste alimentée par la batterie 62.

La figure 13 illustre un perfectionnement d'un circuit récepteur 3 présentant une tolérance accrue aux dispersions de fréquence ou de polarisation par exemple. Le circuit récepteur 3 comprend en pratique plusieurs antennes réceptrices, chaque antenne réceptrice étant couplée à un convertisseur alternatif/continu respectif. Chaque convertisseur alternatif/continu comporte un accumulateur de stockage d'énergie respectif. Ces accumulateurs sont connectés en série entre une masse et une entrée du circuit d'identification 32. Chaque sortie d'un convertisseur est connectée à la borne positive de son accumulateur respectif.

Dans l'exemple, le circuit récepteur 3 comprend des antennes 30a, 30b, 30c, des convertisseurs 311 a, 311 b, 311c, et des condensateurs 312a, 312b, 312c utilisés comme accumulateurs. L'antenne 30a est connectée à l'entrée du convertisseur 311 a. La sortie du convertisseur 311 a est connectée à la borne positive du condensateur 312a. La borne positive du condensateur 312a est connectée à l'entrée du circuit d'identification 32. L'antenne 30b est connectée à l'entrée du convertisseur 311 b. La sortie du convertisseur 311 b est connectée à la borne positive du condensateur 312b. La borne positive du condensateur 312b est connectée à la borne négative du condensateur 312a. L'antenne 30c est connectée à l'entrée du convertisseur 311c. La sortie du convertisseur 311c est connectée à la borne positive du condensateur 312c. La borne positive du condensateur 312c est connectée à la borne négative du condensateur 312b. La borne négative du condensateur 312c est connectée à la masse.

Les antennes 30a, 30b, 30c présentent des bandes passantes en fréquence distinctes ou des sensibilités distinctes à la polarisation des ondes électromagnétiques incidentes. Les tensions générées par les différents convertisseurs se cumulent. Par conséquent, même si une antenne n'est pas irradiée par un rayonnement électromagnétique ayant la polarisation ou la fréquence lui correspondant, cette antenne n'interfère pas de façon destructrice sur l'énergie récupérée d'un signal d'alimentation par le circuit récepteur 3. Les différences de phases entre les signaux électriques générés par les différentes antennes n'ont notamment pas d'incidence destructrice sur la récupération d'énergie. Par conséquent, un tel circuit récepteur 3 présente le cas échéant une meilleure tolérance à des dispersions de polarisation ou de fréquence.

## Revendications

1. Système électronique (1), comprenant :
- un émetteur électromagnétique radiatif (2) configuré pour émettre sélectivement un signal d'activation, le signal d'activation incluant séquentiellement un signal d'alimentation suivi d'un signal d'identification ;
- une interface de connexion à une source d'alimentation électrique (6) ;
- une charge électrique (71) destinée à être alimentée par la source d'alimentation ;
- un circuit (5) de désactivation d'une mise en veille de la charge électrique, incluant :
- un récepteur (3) comprenant :
- une interface de réception (30) ;
- un redresseur (31) connecté à l'interface de réception et configuré pour générer une tension d'activation continue à partir d'un signal d'activation reçu sur l'interface de réception ;
- un interrupteur (4) d'activation configuré pour sélectivement connecter/déconnecter la charge électrique (71) à/ de l'alimentation en fonction de l'état d'un signal de commande ;
- un circuit d'identification (32) configuré pour extraire un identifiant du signal d'activation et déterminer la concordance entre l'identifiant extrait et un identifiant mémorisé, et configuré pour appliquer la tension d'activation comme signal de commande de fermeture de l'interrupteur (4) d'activation si une concordance est déterminée, **caractérisé en ce que** :
- l'émetteur électromagnétique radiatif (2) est configuré pour émettre sélectivement le signal d'activation dans la bande de fréquence UHF, la puissance du signal d'alimentation du signal d'activation étant au moins dix fois supérieure à la puissance du signal d'identification ;
- le redresseur (31) inclut un circuit redresseur (311) et un dispositif (312) de stockage d'une charge électrique connecté à la sortie du circuit redresseur (311).

2. Système selon la revendication 1, dans lequel le redresseur (31) inclut un convertisseur continu/continu (313) élévateur de tension, présentant une entrée connectée au dispositif de stockage (312) et connectée à la sortie du circuit redresseur (311), et présentant une sortie fournissant la tension d'activation.

3. Système selon l'une quelconque des revendications précédentes, incluant un interrupteur (420) de maintien d'activation connecté en parallèle dudit interrupteur d'activation (421), et incluant en outre un circuit de commande (72) maintenant l'interrupteur de maintien (420) fermé lorsque la charge électrique (71) est connectée à l'interface de connexion.

4. Système selon l'une quelconque des revendications précédentes, dans lequel l'interrupteur d'activation est un premier transistor MOS (421) dont la source est connectée à l'interface de connexion et dont le drain est connecté à la charge (71), le système comprenant en outre un deuxième transistor MOS (422) dont la grille reçoit la tension d'activation, dont la source est connectée un dispositif (423) de stockage d'une charge électrique et dont le drain est connecté à la grille du premier transistor MOS.

5. Système selon la revendication 4, dans lequel le premier transistor MOS présente une tension drain-source maximale applicable au moins égale à 500V.

6. Système selon l'une quelconque des revendications précédentes, dans lequel l'interface de réception (30) comprend une première antenne (301) connectée au redresseur (311) et une deuxième antenne (302) connectée au circuit d'identification (32).

7. Système selon l'une quelconque des revendications 1 à 5, dans lequel l'interface de réception (30) comprend une antenne (301) connectée au redresseur (311) et au circuit d'identification (32).

8. Système selon l'une quelconque des revendications précédentes, dans lequel l'interrupteur d'activation (421) présente un courant de fuite inférieur à 1mW.

9. Système selon l'une quelconque des revendications précédentes, dans lequel le rapport cyclique du signal d'alimentation (Pa) dans le signal d'activation émis par l'émetteur électromagnétique (2) est au moins égal à 95%.

10. Système selon l'une quelconque des revendications précédentes, dans lequel la durée du signal d'activation émis par l'émetteur électromagnétique (2) est inférieure ou égale à 100ms.

11. Système selon l'une quelconque des revendications précédentes, dans lequel la puissance du signal d'alimentation du signal d'activation émis par l'émetteur électromagnétique (2) est au moins égale à 0,5W.

12. Système selon l'une quelconque des revendications précédentes, dans lequel le circuit d'identification (32) inclut :
- un démodulateur (321) configuré pour démoduler le signal d'identification et extraire l'identifiant extrait ;
- une mémoire (323) mémorisant l'identifiant mémorisé ;
- un circuit de traitement (322) comparant l'identifiant extrait à l'identifiant mémorisé.

13. Système selon l'une quelconque des revendications précédentes, dans lequel le redresseur (31) applique la tension d'activation générée comme tension d'alimentation du circuit d'identification (32).

## Patentansprüche

1. Elektronisches System (1), umfassend:
- einen elektromagnetischen Strahlungsemitter (2), der konfiguriert ist, um selektiv ein Aktivierungssignal zu emittieren, wobei das Aktivierungssignal sequentiell ein Speisungssignal, gefolgt von einem Identifikationssignal aufweist;
- eine Verbindungsschnittstelle an eine Stromversorgungsquelle (6);
- eine elektrische Last (71), die dazu bestimmt ist, durch die Stromquelle versorgt zu werden;
- eine Deaktivierungsschaltung (5) eines Standby-Modus der elektrischen Last, umfassend:
- einen Empfänger (3), umfassend:
- eine Empfangsschnittstelle (30);
- einen Gleichrichter (31) der an die Empfangsschnittstelle angeschlossen ist und konfiguriert ist, um eine Aktivierungsgleichspannung aus einem Aktivierungssignal zu erzeugen, das auf der Empfangsschnittstelle erhalten wird;
- einen Aktivierungsschalter (4), der konfiguriert ist, um selektiv die elektrische Last (71) in Abhängigkeit von dem Zustand eines Steuersignals an die Stromversorgung (71) anzuschließen/davon zu trennen;
- eine Identifikationsschaltung (32), die konfiguriert ist, um eine Kennung des Aktivierungssignals zu extrahieren und die Übereinstimmung zwischen der extrahierten Kennung und einer gespeicherten Kennung zu bestimmen, und konfiguriert ist, um die Aktivierungsspannung als Steuersignal des Schließens des Aktivierungsschalters (4) anzulegen, wenn eine Übereinstimmung bestimmt wird, **dadurch gekennzeichnet, dass**:
- der elektromagnetische Strahlungsemitter (2) konfiguriert ist, um selektiv das Aktivierungssignal in dem UHF-Frequenzband zu emittieren, wobei die Leistung des Speisungssignals des Aktivierungssignals mindestens zehn Mal größer als die Leistung des Identifikationssignals ist;
- der Gleichrichter (31) eine Gleichrichterschaltung (311) und eine Vorrichtung (312) zum Speichern einer elektrischen Last aufweist, die an den Ausgang der Gleichrichterschaltung (311) angeschlossen ist.

2. System nach Anspruch 1, wobei der Gleichrichter (31) einen Gleichspannungswandler (313) zur Spannungserhöhung aufweist, der einen Eingang aufweist, der an die Speichervorrichtung (312) angeschlossen ist und an den Ausgang der Gleichrichterschaltung (311) angeschlossen ist, und einen Ausgang aufweist, der die Aktivierungsspannung bereitstellt.

3. System nach einem der vorhergehenden Ansprüche, das einen Schalter (420) zum Aufrechterhalten der Aktivierung aufweist, der parallel zu dem Aktivierungsschalter (421) geschaltet ist, und ferner eine Steuerschaltung (72) aufweist, die den Schalter zum Aufrechterhalten (420) geschlossen hält, wenn die elektrische Last (71) an die Verbindungsschnittstelle angeschlossen ist.

4. System nach einem der vorhergehenden Ansprüche, wobei der Aktivierungsschalter ein erster MOS-Transistor (421) ist, dessen Source an die Verbindungsschnittstelle angeschlossen ist und dessen Drain an die Last (71) angeschlossen ist, wobei das System ferner einen zweiten MOS-Transistor (422) aufweist, dessen Gate die Aktivierungsspannung empfängt, dessen Source an eine Vorrichtung (423) zum Speichern einer elektrischen Last angeschlossen ist und dessen Drain an das Gate des ersten MOS-Transistors angeschlossen ist.

5. System nach Anspruch 4, wobei der erste MOS-Transistor eine anwendbare maximale Drain-Source-Spannung aufweist, die mindestens gleich 500 V ist.

6. System nach einem der vorhergehenden Ansprüche, wobei die Empfangsschnittstelle (30) eine erste Antenne (301), die an den Gleichrichter (311) angeschlossen ist, und eine zweite Antenne (302) aufweist, die an die Identifikationsschaltung (32) angeschlossen ist.

7. System nach einem der Ansprüche 1 bis 5, wobei die Empfangsschnittstelle (30) eine Antenne (301) aufweist, die an den Gleichrichter (311) und an die Identifikationsschaltung (32) angeschlossen ist.

8. System nach einem der vorhergehenden Ansprüche, wobei der Aktivierungsschalter (421) einen Leckstrom von weniger als 1 mW aufweist.

9. System nach einem der vorhergehenden Ansprüche, wobei das zyklische Verhältnis des Speisungssignals (Pa) in dem Aktivierungssignal, das von dem elektromagnetischen Emitter (2) emittiert wird, mindestens gleich 95 % ist.

10. System nach einem der vorhergehenden Ansprüche, wobei die Dauer des Aktivierungssignals, das von dem elektromagnetische Emitter (2) emittiert wird, niedriger als oder gleich 100 ms ist.

11. System nach einem der vorhergehenden Ansprüche, wobei die Leistung des Speisungssignals des Aktivierungssignals, das von dem elektromagnetischen Emitter (2) emittiert wird, mindestens gleich 0,5 W ist.

12. System nach einem der vorangehenden Ansprüche, wobei die Identifikationsschaltung (32) Folgendes aufweist:
- einen Demodulator (321), der konfiguriert ist, um das Identifikationssignal zu demodulieren und die extrahierte Kennung zu extrahieren;
- einen Speicher (323), der die gespeicherte Kennung speichert;
- eine Verarbeitungsschaltung (322), die die extrahierte Kennung mit der gespeicherten Kennung vergleicht.

13. System nach einem der vorhergehenden Ansprüche, wobei der Gleichrichter (31) die Aktivierungsspannung anlegt, die als Versorgungsspannung der Identifikationsschaltung (32) erzeugt wird.

## Claims

1. Electronic system (1), comprising:
- a radiative electromagnetic emitter (2) configured for selectively emitting an activation signal, the activation signal including in series a power supply signal followed by an identification signal;
- an interface for connecting to an electrical power supply source (6);
- an electrical load (71) intended to be powered by the power supply source;
- a circuit (5) for deactivating the placing of the electrical load on standby, including:
- a receiver (3) comprising:
- a reception interface (30);
- a rectifier (31) connected to the reception interface and configured for generating a direct-current activation voltage from an activation signal received at the reception interface;
- an activation switch (4) configured for selectively connecting/disconnecting the load (71) to/from the power supply as a function of the state of a control signal;
- an identification circuit (32) configured for extracting an identifier from the activation signal and determining the agreement between the extracted identifier and an identifier stored in memory, and configured for applying the activation voltage as a signal controlling the closing of the activation switch (4) if an agreement is determined, **characterized in that**:
- the radiative electromagnetic emitter (2) is configured for selectively emitting the activation signal in the UHF frequency band, the power of the power supply signal of the activation signal being at least ten times greater than the power of the identification signal;
- the rectifier (31) includes a rectifier circuit (311) and a device (312) for storing an electrical load connected to the output of the rectifier circuit (311).

2. System according to Claim 1, wherein the rectifier (31) includes a step-up direct-current/direct-current voltage converter (313), having an input connected to the storage device (312) and connected to the output of the rectifier circuit (311), and having an output supplying the activation voltage.

3. System according to either of the preceding claims, including a switch (420) for holding activation connected in parallel with said activation switch (421), and furthermore including a control circuit (72) holding the holding switch (420) closed when the electrical load (71) is connected to the connection interface.

4. System according to any one of the preceding claims, wherein the activation switch is a first MOS transistor (421) whose source is connected to the connection interface and whose drain is connected to the load (71), the system furthermore comprising a second MOS transistor (422) whose gate receives the activation voltage, whose source is connected to a device (423) for storing an electrical load and whose drain is connected to the gate of the first MOS transistor.

5. System according to Claim 4, wherein the first MOS transistor has a maximum applicable drain-source voltage at least equal to 500V.

6. System according to any one of the preceding claims, wherein the reception interface (30) comprises a first antenna (301) connected to the rectifier (311) and a second antenna (302) connected to the identification circuit (32).

7. System according to any one of Claims 1 to 5, wherein the reception interface (30) comprises an antenna (301) connected to the rectifier (311) and to the identification circuit (32).

8. System according to any one of the preceding claims, wherein the activation switch (421) has a leakage current of less than 1 mW.

9. System according to any one of the preceding claims, wherein the duty cycle of the power supply signal (Pa) in the activation signal emitted by the electromagnetic emitter (2) is at least equal to 95%.

10. System according to any one of the preceding claims, wherein the duration of the activation signal emitted by the electromagnetic emitter (2) is less than or equal to 100ms.

11. System according to any one of the preceding claims, wherein the power of the power supply signal of the activation signal emitted by the electromagnetic emitter (2) is at least equal to 0.5W.

12. System according to any one of the preceding claims, wherein the identification circuit (32) includes:
- a demodulator (321) configured for demodulating the identification signal and extracting the extracted identifier;
- a memory (323) storing the stored identifier;
- a processing circuit (322) comparing the extracted identifier with the identifier stored in memory.

13. System according to any one of the preceding claims, wherein the rectifier (31) applies the activation voltage generated as power supply voltage of the identification circuit (32).
